# EUROPEAN PATENT APPLICATION

(11) **EP 2 821 969 A1**
(43) Date of publication of application: **07.01.2015**
(21) Application number: 14150495.1
(22) Date of filing: 08.01.2014
(51) Int. Cl.: G06T 15/00, G06F 3/00, H04N 13/02

(54) **Apparatus and method for generating or displaying three-dimensional image**

(30) Priority: 01.07.2013 KR 20130076615
(71) Applicant: Samsung Electronics Co., Ltd, Gyeonggi-do 443-742 (KR)
(72) Inventor: Kim, Seung-hun, Gyeonggi-do (KR)
(74) Representative: Bray, Richard Anthony

(57) **Abstract**

A three-dimensional (3D) image generating method is described. A plurality of captured-images is acquired. The plurality of captured-images includes left-eye images and right-eye images. Direction information is acquired when capturing each of the plurality of captured-images. A left-eye spherical image is generated by disposing the left-eye images of the plurality of captured-images in a first spherical coordinate system by using the direction information of the plurality of captured-images. A right-eye spherical image is generated by disposing the right-eye images of the plurality of captured-images in a second spherical coordinate system by using the direction information of the plurality of captured-images. The left-eye spherical image and the right-eye spherical image are stored.

## Description

### CROSS-REFERENCE TO RELATED APPLICATIONS

This application claims the priority benefit under 35 U.S.C. § 119(a) from Korean Patent Application No. 10-2013-0076615, filed on July 1, 2013, in the Korean Intellectual Property Office, the disclosure of which is incorporated herein in its entirety by reference.

### BACKGROUND

### 1. Field

One or more embodiments of the present disclosure relate to a three-dimensional (3D) image generating apparatus, a 3D image generating method, a 3D image display apparatus, and a 3D image display method.

### 2. Related Art

Along with increased interest in three-dimensional (3D) content, interest in techniques of generating and displaying 3D images has also increased. In a method of providing a 3D image, a user recognizes a 3D image by respectively receiving two different images for the left eye and the right eye according to the eyes' horizontal separation and processing the two images in the brain as one image. Several techniques in this regard include use of polarizing glasses, use of color filter glasses, use of a special screen, and the like.

### SUMMARY

One or more embodiments of the present disclosure include an apparatus and method for generating and displaying a three-dimensional (3D) image, whereby a user is able to view a 3D image from a 360-degree field of view.

According to the present invention there is provided an apparatus and method as set forth in the appended claims. Other features of the invention will be apparent from the dependent claims, and the description which follows.

Additional aspects will be set forth in part in the description which follows and, in part, will be apparent from the description, or may be learned by practice of the presented embodiments.

According to one or more embodiments of the present disclosure, a three-dimensional (3D) image generating method includes acquiring a plurality of captured-images, the plurality of captured-images including left-eye images and right-eye images, and direction information when capturing each of the plurality of captured-images. A left-eye spherical image is generated by disposing the left-eye images of the plurality of captured-images in a first spherical coordinate system by using the direction information of the plurality of captured-images. A right-eye spherical image is generated by disposing the right-eye images of the plurality of captured-images in a second spherical coordinate system by using the direction information of the plurality of captured-images. The left-eye spherical image and the right-eye spherical image are stored.

The left-eye spherical image may be generated by stitching the left-eye images of the plurality of captured-images disposed in the first spherical coordinate system. The right-eye spherical image may be generated by stitching the right-eye image of the plurality of captured-images disposed in the second spherical coordinate system.

The generating of the left-eye spherical image may include determining the left-eye images to be stitched based on a result of matching the left-eye images and the right-eye images of the plurality of captured-images. The generating of the right-eye spherical image may include determining the right-eye images to be stitched based on a result of matching the left-eye images and the right-eye images of the plurality of captured-images.

The storing of the left-eye spherical image and the right-eye spherical image may include storing the left-eye spherical image together with a coordinate value of each pixel of the left-eye spherical image in the first spherical coordinate system; and storing the right-eye spherical image together with a coordinate value of each pixel of the right-eye spherical image in the second spherical coordinate system.

According to one or more embodiments of the present disclosure, a three-dimensional (3D) image displaying method is described. A left-eye spherical image in which pixels thereof are disposed in a first spherical coordinate system and a right-eye spherical image in which pixels thereof are disposed in a second spherical coordinate system are loaded. A gradient of a control device is detected. Display direction information is determined based on the detected gradient. A display area corresponding to the display direction information is determined. A planar 3D image corresponding to the display area is generated from the left-eye spherical image and the right-eye spherical image. The planar 3D image is displayed.

The 3D image displaying method may further include determining a size of the planar 3D image based on movement of the control device.

The generating of the planar 3D image may include generating a left-eye planar image and a right-eye planar image by disposing pixel values of the display area of the left-eye spherical image and the right-eye spherical image on a plane. The displaying of the planar 3D image may include alternately displaying the left-eye planar image and the right-eye planar image.

According to one or more embodiments of the present disclosure, a three-dimensional (3D) image generating apparatus includes a first optical system and a second optical system that collect incident light, at least one imaging element, an image acquiring unit, a direction information acquiring unit, a spherical image generating unit, and a data storage unit. The imaging element photoelectrically converts the incident light passing through the first optical system and the second optical system. The image acquiring unit generates a plurality of captured-images, the plurality of captured-images including left-eye images and right-eye images, by using the first optical system, the second optical system, and the imaging element. The direction information acquiring unit acquires direction information when imaging each of the plurality of captured-images. The spherical image generating unit generates a left-eye spherical image by disposing the plurality of captured-images in a first spherical coordinate system, and generates a right-eye spherical image by disposing the right-eye images of the plurality of captured-images in a second spherical coordinate system by using direction information of the plurality of captured-images. The data storage unit stores the left-eye spherical image and the right-eye spherical image.

The spherical image generating unit may include a left-eye spherical image generating unit that generates the left-eye spherical image by stitching the left-eye images of the plurality of captured-images disposed in the first spherical coordinate system. The spherical image generating unit may further include a right-eye spherical image generating unit that generates the right-eye spherical image by stitching the right-eye images of the plurality of captured-images disposed in the second spherical coordinate system.

The left-eye spherical image generating unit may determine the left-eye images to be stitched based on a result of matching the left-eye images and the right-eye images of the plurality of captured-images. The right-eye spherical image generating unit may determine the right-eye images to be stitched based on the result of matching the left-eye images and the right-eye images of the plurality of captured-images.

The data storage unit may store the left-eye spherical image together with a coordinate value of each pixel of the left-eye spherical image in the first spherical coordinate system, and may store the right-eye spherical image together with a coordinate value of each pixel of the right-eye spherical image in the second spherical coordinate system.

According to one or more embodiments of the present disclosure, a three-dimensional (3D) image display apparatus includes a data storage unit, a display direction determination unit, a display area determination unit, a planar 3D image generating unit, and a display unit. The data storage unit stores a left-eye spherical image in which pixels thereof are disposed in a first spherical coordinate system and a right-eye spherical image in which pixels thereof are disposed in a second spherical coordinate system. The display direction determination unit detects a gradient of a control device and determines display direction information based on the detected gradient. The display area determination unit determines a display area corresponding to the display direction information. The planar 3D image generating unit generates a planar 3D image corresponding to the display area from the left-eye spherical image and the right-eye spherical image. The display unit displays the planar 3D image.

The 3D image display apparatus may further include an image size determination unit that determines a size of the planar 3D image based on a movement of the control device.

The planar 3D image generating unit may generate a left-eye planar image and a right-eye planar image by disposing pixel values of the display area of the left-eye spherical image and the right-eye spherical image on a plane. The display unit alternately may display the left-eye planar image and the right-eye planar image.

According to one or more embodiments of the present disclosure, a non-transitory computer-readable recording medium stores computer program codes for executing a three-dimensional (3D) image generating method when read out and executed by a processor. The 3D image generating method includes acquiring a plurality of captured-images, the plurality of captured-images including left-eye images and right-eye images, and direction information when capturing each of the plurality of captured-images. The method further includes generating a left-eye spherical image by disposing the left-eye images of the plurality of captured-images in a first spherical coordinate system, and generating a right-eye spherical image by disposing the right-eye images of the plurality of captured-images in a second spherical coordinate system, by using the direction information of the plurality of captured-images. The method further includes storing the left-eye spherical image and the right-eye spherical image.

The generating of the left-eye spherical image may include stitching the left-eye images of the plurality of captured-images disposed in the first spherical coordinate system. The generating of the right-eye spherical image may include stitching the right-eye image of the plurality of captured-images disposed in the second spherical coordinate system.

The storing of the left-eye spherical image and the right-eye spherical image may include: storing the left-eye spherical image together with a coordinate value of each pixel of the left-eye spherical image in the first spherical coordinate system; and storing the right-eye spherical image together with a coordinate value of each pixel of the right-eye spherical image in the second spherical coordinate system.

According to one or more embodiments of the present disclosure, a non-transitory computer-readable recording medium stores computer program codes for executing a three-dimensional (3D) image displaying method when read out and executed by a processor. The 3D image displaying method includes loading a left-eye spherical image in which pixels thereof are disposed in a first spherical coordinate system and a right-eye spherical image in which pixels thereof are disposed in a second spherical coordinate system. The method further includes detecting a gradient of a control device. The method further includes determining display direction information according to the detected gradient. The method further includes determining a display area corresponding to the display direction information. The method further includes generating a planar 3D image corresponding to the display area from the left-eye spherical image and the right-eye spherical image. The method further includes displaying the planar 3D image.

The 3D image displaying method may further include determining a size of the planar 3D image according to a movement of the control device.

The generating of the planar 3D image may include generating a left-eye planar image and a right-eye planar image by disposing pixel values of the display area of the left-eye spherical image and the right-eye spherical image on a plane. The displaying of the planar 3D image may include alternately displaying the left-eye planar image and the right-eye planar image.

### BRIEF DESCRIPTION OF THE DRAWINGS

For a better understanding of the invention, and to show how embodiments of the same may be carried into effect, reference will now be made, by way of example, to the accompanying diagrammatic Figures in which:
FIG. 1 is a block diagram illustrating a configuration of a 3D image generating apparatus according to an embodiment;
FIG. 2 is a diagram illustrating a rear perspective view of a 3D image generating apparatus according to an embodiment;
FIG. 3A is a diagram illustrating a front perspective view of a 3D image generating apparatus according to another embodiment;
FIGS. 3B and 3C are diagrams illustrating partial front views of the 3D image generating apparatus of FIG. 3A.
FIG. 4 is a diagram illustrating a process of generating a left-eye spherical image or a right-eye spherical image from a plurality of captured-images;
FIG. 5 is a block diagram illustrating a configuration of a spherical image generating unit according to another embodiment;
FIG. 6 is a diagram illustrating a process of synthesizing a plurality of left-eye images or a plurality of right-eye images according to another embodiment;
FIG. 7 is a diagram illustrating examples of a left-eye spherical image and a right-eye spherical image according to an embodiment;
FIG. 8 is a flowchart illustrating a 3D image generating method according to an embodiment;
FIG. 9 is a block diagram illustrating a configuration of a 3D image display apparatus according to another embodiment;
FIG. 10 is a diagram illustrating a 3D image display apparatus according to an embodiment;
FIG. 11 is a diagram illustrating a 3D image display apparatus according to another embodiment;
FIG. 12 is a diagram illustrating a process of determining a display area and generating a planar 3D image, according to an embodiment;
FIG. 13 is a flowchart illustrating a 3D image displaying method according to another embodiment;
FIG. 14 is a block diagram illustrating a structure of a 3D image display apparatus according to another embodiment; and
FIG. 15 is a diagram illustrating a process of determining a display area according to another embodiment.

### DETAILED DESCRIPTION

Hereinafter, embodiments of the invention will be described more fully with reference to the accompanying drawings. The detailed description and the drawings are introduced to provide an understanding of the invention, and thus, detailed descriptions of well-known technologies may be omitted. In addition, the specification and the drawing are not intended to limit the scope of the invention and the scope of the invention is defined by claims. The terms used herein are for the purpose of properly describing the embodiments of the invention, and thus, may be interpreted as corresponding to the meaning and concept of the invention. As used herein, the term "and/or" includes any and all combinations of one or more of the associated listed items. Expressions such as "at least one of," when preceding a list of elements, modify the entire list of elements and do not modify the individual elements of the list.

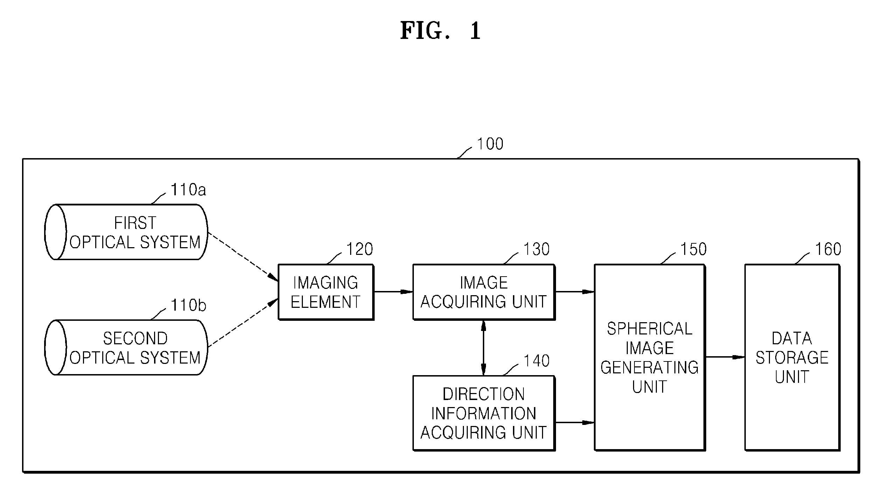

FIG. 1 is a block diagram illustrating a configuration of a 3D image generating apparatus 100 according to an embodiment. The 3D image generating apparatus 100 according to the current embodiment includes a first optical system 110a, a second optical system 110b, an imaging element 120, an image acquiring unit 130, a direction information acquiring unit 140, a spherical image generating unit 150, and a data storage unit 160.

The 3D image generating apparatus 100 includes the first optical system 110a and the second optical system 110b in order to simultaneously capture a left-eye image and a right-eye image.

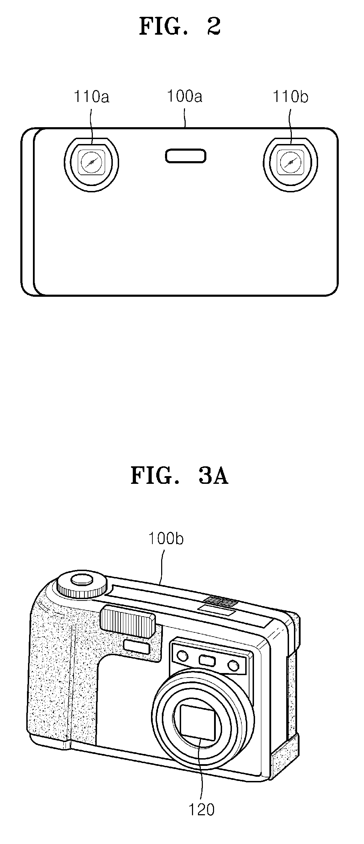

FIG. 2 is a diagram illustrating a rear perspective view of a 3D image generating apparatus 100a, such as the 3D image generating apparatus 100 of FIG. 1. The 3D image generating apparatus 100a includes the first optical system 110a and the second optical system 110b.

As illustrated in FIG. 2, the first optical system 110a and the second optical system 110b are separated from each other so as to receive different incident light from a subject. The first optical system 110a and the second optical system 110b receive incident light through different paths so as to generate a left-eye image from the incident light passing through the first optical system 110a and to generate a right-eye image from the incident light passing through the second optical system 110b.

According to the current embodiment, the imaging element 120 may be disposed such that an area corresponding to the first optical system 110a and an area corresponding to the second optical system 110b do not overlap each other. Alternatively, the imaging element 120 may include a first imaging element corresponding to the first optical system 110a and a second imaging element corresponding to the second optical system 110b. In this case, two imaging elements that are physically separated from each other may be provided.

Each of the first optical system 110a and the second optical system 110b may include a lens, an aperture, and a shutter. Alternatively, instead of the lens, a plurality of lens groups, a plurality of lenses, or any combination thereof may be used.

An optical signal (e.g., incident light) passing through the first optical system 110a and the second optical system 110b reaches a light-receiving surface of the imaging element 120 and forms an image of the subject. The imaging element 120 may be a charge coupled device (CCD) image sensor or a complementary metal oxide semiconductor (CMOS) image sensor which converts the optical signal into an electrical signal.

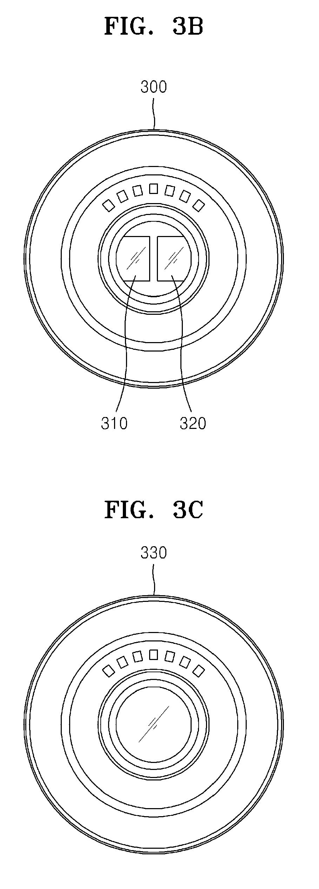

FIG. 3A is a diagram illustrating a front perspective view of a 3D image generating apparatus 100b, such as the 3D image generating apparatus 100, according to another embodiment. FIGS. 3B and 3C are diagrams illustrating partial front views of the 3D image generating apparatus 100b. The 3D image generating apparatus 100b also includes the first optical system 110a and the second optical system 110b.

According to the current embodiment, the 3D image generating apparatus 100b is coupled to an exchangeable lens 300 that includes a first lens 310 corresponding to the first optical system 110a and a second lens 320 corresponding to the second optical system 110b, thereby configuring the first optical system 110a and the second optical system 110b. An imaging element 120 may be divided into an area corresponding to the first optical system 110a and an area corresponding to the second optical system 110b. The 3D image generating apparatus 100b according to the current embodiment may generate a 2D image by being coupled to an exchangeable lens 330 for capturing a 2D image which is illustrated in FIG. 3C, and may also generate a 3D image by being coupled to the exchangeable lens 300, which is illustrated in FIG. 3B, for capturing a 3D image.

An image acquiring unit 130 (see FIG. 1) generates a captured-image from an imaging signal that is generated by photoelectric conversion via the imaging element 120. The captured-image generated by the image acquiring unit 130 may include a left-eye image, which is generated from incident light passing through the first optical system 110a, and a right-eye image, which is generated from incident light passing through the second optical system 110b.

When only one imaging element 120 is included and the imaging element 120 is divided into two areas respectively corresponding to the first optical system 110a and the second optical system 110b, the image acquiring unit 130 may generate a left-eye image by extracting the area corresponding to the first optical system 110a from the imaging signal and may generate a right-eye image by extracting the area corresponding to the second optical system 110b from the imaging signal.

When the imaging element 120 includes a first imaging element and a second imaging element which are physically separated from each other, the imaging element 120 may generate a left-eye image from an imaging signal of the first imaging element and may generate a right-eye image from an imaging signal of the second imaging element.

The image acquiring unit 130 according to the current embodiment may control the first optical system 110a, the second optical system 110b, and the imaging element 120 so as to successively capture a plurality of images in order to acquire a left-eye image and a right-eye image in a 360-degree direction which are expressed in a spherical coordinate system. In this embodiment, a 3D image as seen from a 360-degree field of view expressed in the spherical coordinate system is generated by successively capturing a plurality of images and then connecting the images. For this, in order to acquire captured-images to generate the 3D image as seen from the 360-degree field of view, the image acquiring unit 130 may control the first optical system 110a, the second optical system 110b, and the imaging element 120 so as to perform a successive imaging operation a predetermined number of times or until a sufficient number of captured-images are acquired. That is, when a shutter release signal is input, the image acquiring unit 130 may control the first optical system 110a, the second optical system 110b, and the imaging element 120 so as to perform an imaging operation in succession a predetermined number of times. In this case, the image acquiring unit 130 generates a captured-image including a left-eye image and a right-eye image whenever imaging is performed.

While the imaging operation is being performed, a user captures an image of a subject while changing a direction of the 3D image generating apparatus 100 so that the first optical system 110a and the second optical system 110b are sequentially oriented in the 360-degree field of view. According to the embodiment, a user interface may be provided to guide the user to appropriately change the direction of the 3D image generating apparatus 100b. For example, the user interface may provide information regarding a moving direction of the 3D image generating apparatus 100b, information regarding a moving velocity thereof, information regarding images that have been captured so far, and information regarding a direction in which an image is to be captured hereafter. For this, the 3D image generating apparatus 100 may further include a user interface providing unit (not shown) for providing such a user interface.

According to another embodiment, the image acquiring unit 130 may control the first optical system 110a, the second optical system 110b, and the imaging element 120 so as to record a moving picture. In this case, a plurality of frames is successively imaged after the shutter release signal is input.

A direction information acquiring unit 140 acquires direction information regarding each captured-image while a successive imaging operation is performed. The direction information may be acquired from, for example, a gradient sensor, a gyro sensor, a geomagnetic sensor, or an acceleration sensor which is included in the 3D image generating apparatus 100.

The direction information acquiring unit 140 generates direction information every time an image is captured, in synchronization with the image acquiring unit 130 or the imaging element 120, and provides the generated direction information to a spherical image generating unit 150.

When a moving picture is recorded, the direction information acquiring unit 140 generates direction information every time each frame is imaged, and provides the generated direction information to the spherical image generating unit 150.

The spherical image generating unit 150 generates a spherical image by disposing a plurality of captured-images on the spherical coordinate system. At this time, a first spherical coordinate system for a left-eye image and a second spherical coordinate system for a right-eye image are defined. The left-eye images of the plurality of captured-images are disposed in the first spherical coordinate system and are converted into left-eye spherical images. The right-eye images of the plurality of captured-images are disposed in the second spherical coordinate system and are converted into right-eye spherical images.

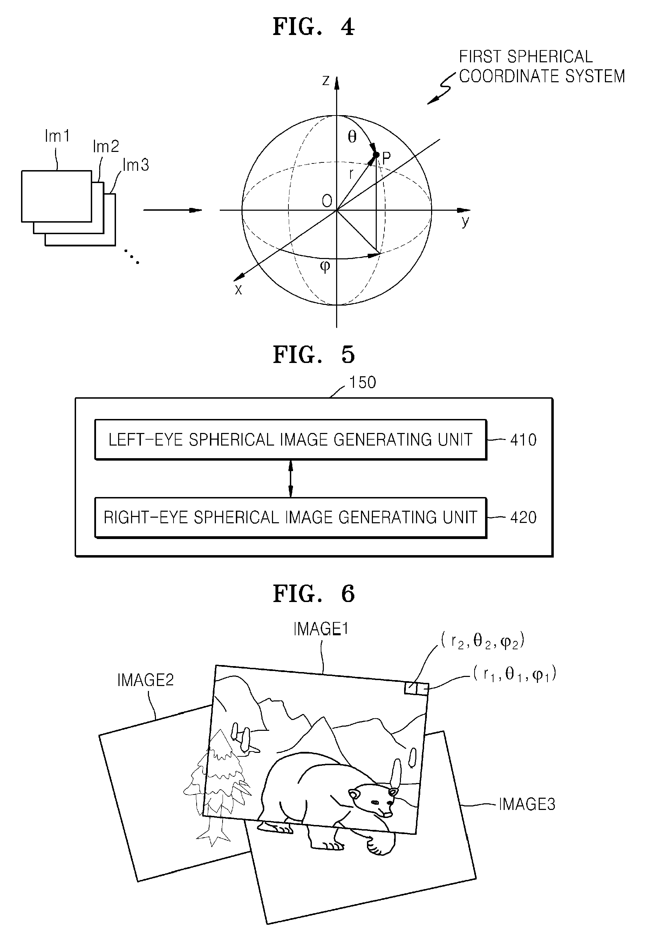

FIG. 4 is a diagram illustrating a process of generating a left-eye spherical image or a right-eye spherical image from a plurality of captured-images.

The plurality of captured-images that is acquired by the image acquiring unit 130 includes a plurality of left-eye images and a plurality of right-eye images. FIG. 4 illustrates a process of generating a left-eye spherical image from the plurality of left-eye images. A process of generating a right-eye spherical image from the plurality of right-eye images is performed on the same principle as the process of generating the left-eye spherical image.

Each of the plurality of left-eye images Im1, Im2, and Im3 has the corresponding direction information. The left-eye images are disposed at their corresponding positions in the first spherical coordinate system. For example, where a photographer is located at a central point O within a sphere of the first spherical coordinate system, and when the photographer views a direction corresponding to the direction information corresponding to the relevant left-eye image at the central point O, the relevant left-eye image is disposed in an area of the first spherical coordinate system in which the photographer faces. In this manner, the plurality of left-eye images are disposed in the first spherical coordinate system and are then synthesized, thereby generating the left-eye spherical image.

The direction information may be interpolated in accordance with coordinates r, θ, and p of the first spherical coordinate system to thereby be converted into coordinates of the first spherical coordinate system. In such a process, when the 3D image generating apparatus 100 has low processing specifications, a cloud service may be utilized for increasing a processing speed for the conversion.

When the image acquiring unit 130 acquires a moving picture, the spherical image generating unit 150 may generate the left-eye spherical image and the right-eye spherical image so that a portion, which is expressed as a moving picture by a plurality of frames overlapping and being input at the relevant point of time, is expressed as a moving picture and the remaining portions are expressed as a still image. For this, portions other than the area that is imaged at the relevant point of time may be expressed as a moving picture by utilizing frames that are imaged at the previous point of time or at the later point of time.

FIG. 5 is a block diagram illustrating a configuration of the spherical image generating unit 150 according to another embodiment. The spherical image generating unit 150 according to the current embodiment includes a left-eye spherical image generating unit 410 and a right-eye spherical image generating unit 420.

The left-eye spherical image generating unit 410 receives a plurality of left-eye images from the image acquiring unit 130, and receives a plurality of pieces of direction information respectively corresponding to the plurality of left-eye images from the direction information acquiring unit 140, thereby generating a left-eye spherical image.

The right-eye spherical image generating unit 420 receives a plurality of right-eye images from the image acquiring unit 130, and receives a plurality of pieces of direction information respectively corresponding to the plurality of right-eye images from the direction information acquiring unit 140, thereby generating a right-eye spherical image.

According to the current embodiment, the left-eye spherical image generating unit 410 may select the left-eye images to be synthesized with reference to the plurality of right-eye images in order to generate the left-eye spherical image. In addition, the right-eye spherical image generating unit 420 may select the right-eye images to be synthesized with reference to the plurality of left-eye images in order to generate the right-eye spherical image. For example, when there is a plurality of the left-eye images corresponding to a specific direction, the left-eye images to be synthesized may be selected by selecting the left-eye images having a high similarity with respect to the right-eye images. In this case, the similarity between the images (e.g., the left-eye images and right-eye images) may be determined by matching feature points (for example, color information) with each other.

FIG. 6 is a diagram illustrating a process of synthesizing a plurality of left-eye images or a plurality of right-eye images according to another embodiment.

When the plurality of left-eye images are disposed in the first spherical coordinate system, the spherical image generating unit 150 generates a left-eye spherical image by stitching adjacent left-eye images. For example, an IMAGE 1, an IMAGE 2, and an IMAGE 3, which are adjacent to each other, are synthesized. At this time, positions of the IMAGE 1, the IMAGE 2, and the IMAGE 3 may be readjusted so as to extract feature points of the adjacent images and match the feature points of the adjacent images with each other. For example, the feature points may be an edge, gradation, color, or the like. As such, when the plurality of left-eye images are connected to each other and are stitched based on the feature points, coordinate values of pixels of the left-eye spherical image in the first spherical coordinate system are defined, and the coordinate values are stored together with the stitched image. That is, for example, a first pixel has a coordinate value of (r1, θ1, ρ1), and a second pixel has a coordinate value of (r2, θ2, p2).

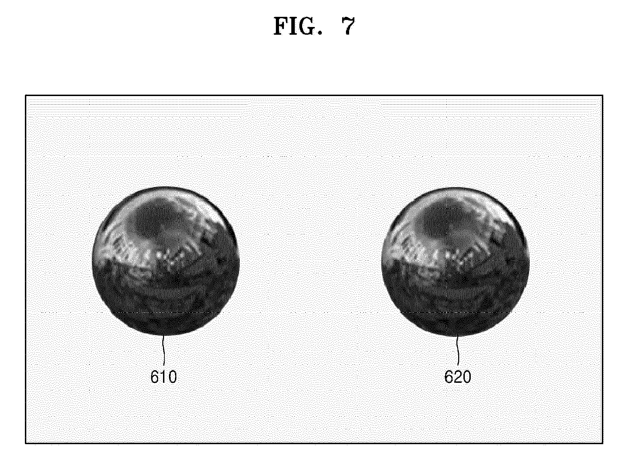

FIG. 7 is a diagram illustrating examples of a left-eye spherical image and a right-eye spherical image according to an embodiment,

The spherical image generating unit 150 may generate a left-eye spherical image 610 and a right-eye spherical image 620 as illustrated in FIG. 7. In the left-eye spherical image 610, a coordinate value of the first spherical coordinate system may be defined and stored in each pixel. In the right-eye spherical image 620, a coordinate value of the second spherical coordinate system may be defined and stored in each pixel.

According to the embodiment, the left-eye spherical image and the right-eye spherical image may be stored as one image file. In this case, information indicating that an image stored in the relevant image file is a spherical 3D image, and information (for example, diameters) regarding sizes of the first coordinate system and the second coordinate system may be stored in a header portion of the relevant image file.

According to another embodiment, the left-eye spherical image and the right-eye spherical image may be stored as separate image files. In this case, information indicating that an image stored in the relevant image file is the left-eye spherical image, a file name and position information of the image file of the corresponding right-eye spherical image, and information (for example, a diameter) regarding a size of the first coordinate system may be stored in a header portion of the image file of the left-eye spherical image. Information indicating that the image stored in the relevant image file is the right-eye spherical image, a file name and position information of the image file of the corresponding left-eye spherical image, and information (for example, a diameter) regarding a size of the second coordinate system may be stored in a header portion of the image file of the right-eye spherical image.

The data storage unit 160 stores the image file that is generated in this manner. In addition, although not shown in FIG. 1, the 3D image generating apparatus 100 according to the embodiment may further include an image file generating unit (not shown) for generating an image file.

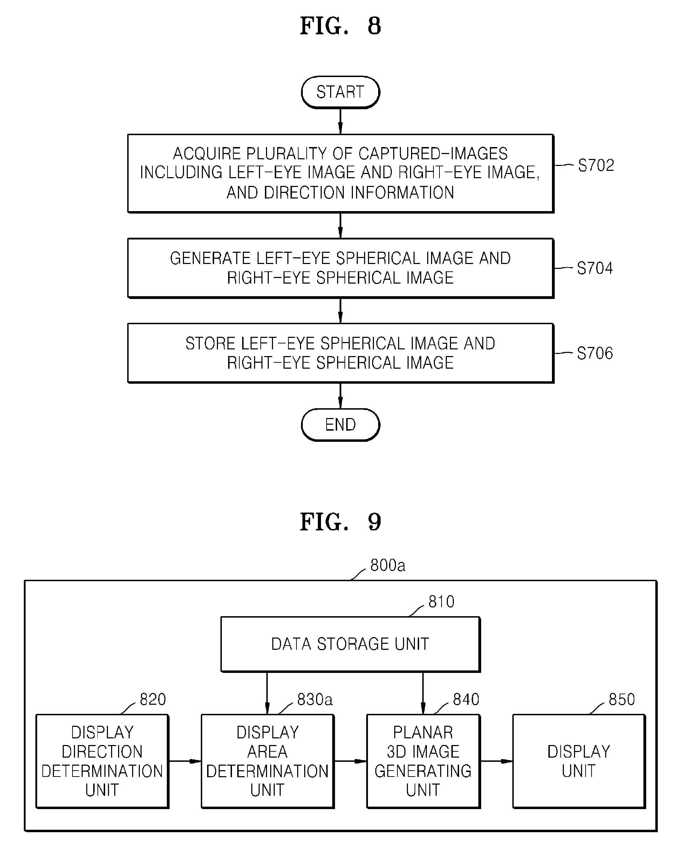

FIG. 8 is a flowchart illustrating a 3D image generating method according to an embodiment.

The 3D image generating method according to the current embodiment acquires direction information corresponding to each of a plurality of captured-images while successively imaging the plurality of captured-images including a left-eye image and a right-eye image (operation S702).

Next, a left-eye spherical image is generated by disposing a plurality of the left-eye images on a first spherical coordinate system, and a right-eye spherical image is generated by disposing a plurality of the right-eye images on a second spherical coordinate system (operation S704). At this time, the plurality of left-eye images and the plurality of right-eye images are disposed in the first spherical coordinate system and the second spherical coordinate system, respectively, by using the direction information.

Next, the left-eye spherical image and the right-eye spherical image are stored (operation S706). At this time, the left-eye spherical image and a coordinate value of each pixel of the first spherical coordinate system are stored together, and the right-eye spherical image and a coordinate value of each pixel of the second spherical coordinate system are stored together. As an embodiment, the left-eye spherical image and the right-eye spherical image may be stored together in one image file. As another embodiment, the left-eye spherical image and the right-eye spherical image may be stored in different image files.

FIG. 9 is a block diagram illustrating a configuration of a 3D image display apparatus 800a according to another embodiment. The 3D image display apparatus 800a according to the current embodiment includes a data storage unit 810, a display direction determination unit 820, a display area determination unit 830a, a planar 3D image generating unit 840, and a display unit 850.

The 3D image display apparatus 800a according to the current embodiment is an apparatus for displaying a 3D image based on a left-eye spherical image and a right-eye spherical image. The data storage unit 810 stores the left-eye spherical image and the right-eye spherical image. According to the embodiment, the left-eye spherical image and the right-eye spherical image may be stored together in one image file. In this case, information indicating that an image stored in the relevant image file is a spherical 3D image, and information (for example, diameters) regarding sizes of a first coordinate system and a second coordinate system may be stored in a header portion of the relevant image file. As another embodiment, the left-eye spherical image and the right-eye spherical image may be stored as separate image files. In this case, information indicating that an image stored in the relevant image file is a left-eye spherical image, a file name and position information of the image file of the corresponding right-eye spherical image, and information (for example, a diameter) regarding a size of the first coordinate system may be stored in a header portion of the image file of the left-eye spherical image. Information regarding that an image stored in the relevant image file is the right-eye spherical image, a file name and position information of the image file of the corresponding left-eye spherical image, and information (for example, a diameter) regarding a size of the second coordinate system may be stored in a header portion of the image file of the right-eye spherical image.

The 3D image display apparatus 800a according to the current embodiment receives direction information from a gradient sensor that is included in the 3D image display apparatus 800a, or gradient information from a control device that communicates with the 3D image display apparatus 800a, thereby displaying a 3D image.

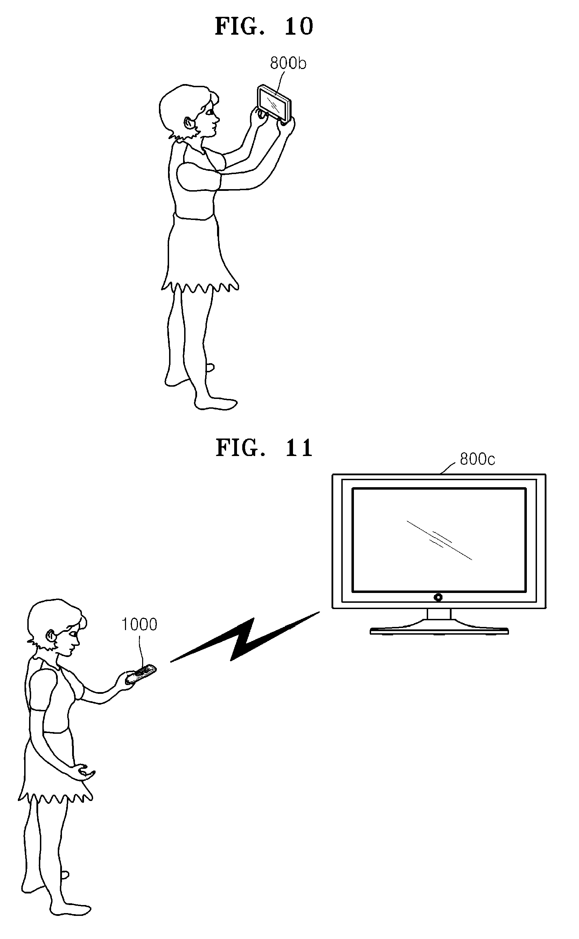

FIG. 10 is a diagram illustrating a 3D image display apparatus 800b according to an embodiment. According to the current embodiment, the 3D image display apparatus 800b, which includes a gradient sensor, may acquire gradient information and display a 3D image by using the acquired gradient information. In the current embodiment, a control device for detecting the gradient information and the 3D image display apparatus 800b are formed as one body.

FIG. 11 is a diagram illustrating a 3D image display apparatus 800c according to another embodiment. According to the current embodiment, the 3D image display apparatus 800c may receive gradient information from a control device 1000 in communication with the 3D image display apparatus 800c. The control device 1000, which includes a gradient sensor, a gyro sensor, a geomagnetic sensor, an acceleration sensor, or the like, may detect a gradient. A user may adjust the gradient of the control device 1000 so as to display an image in a desired direction based on a spherical 3D image.

The display direction determination unit 820 determines display direction information according to the gradient that is detected by the 3D image display apparatus 800a. The gradient may be detected from the gradient sensor included in the 3D image display apparatus 800b as described above, or may be received from the control device 1000 that communicates with the 3D image display apparatus 800c and may detect a gradient.

The display direction information may be generated by conversion of the detected gradient into coordinates of a first spherical coordinate system and a second spherical coordinate system.

The display area determination unit 830a determines a display area corresponding to the display direction information. The planar 3D image generating unit 840 generates a planar 3D image corresponding to the display area from a left-eye spherical image and a right-eye spherical image.

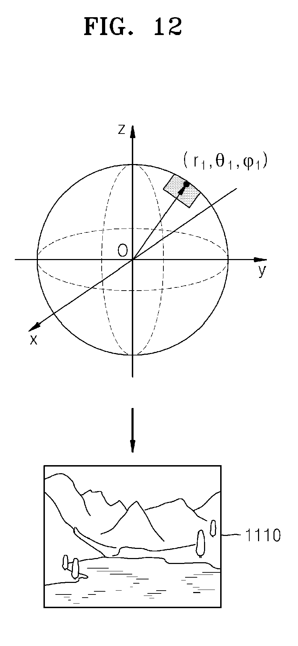

FIG. 12 is a diagram illustrating a process of determining a display area and generating a planar 3D image, according to an embodiment. Hereinafter, an example of a process of generating a left-eye planar 3D image from a left-eye spherical image will be described.

When display direction information r₁, θ₁, and ρ₁ is determined, the display area determination unit 830a detects pixels of the left-eye spherical image which correspond to the display direction information r₁, θ₁, and ρ₁, and determines pixels within a predetermined area based on the pixels to be display areas. The predetermined area may be determined according to various embodiments such as determination to be an area having a predetermined size or determination according to a set resolution (e.g., a resolution of the display unit 850).

The planar 3D image generating unit 840 generates a left-eye planar 3D image 1110 by extracting pixel values of pixels corresponding to the display area from the left-eye spherical image and by making a planar image based on a spherical image. When the spherical image is disposed on a plane, an edge portion thereof is expressed as a curve, and image distortion occurs during the planarization process. The planar 3D image generating unit 840 disposes the spherical image (e.g., the left-eye spherical image) on the plane, makes the edge portion linear, and corrects the image distortion, thereby allowing the left-eye planar 3D image 1110 to be generated.

Similarly to the process of generating the left-eye planar 3D image 1110, the display area determination unit 830a may determine a display area corresponding to the display direction information in a right-eye spherical image. In addition, the planar 3D image generating unit 840 may generate a right-eye planar 3D image corresponding to the production area from the right-eye spherical image.

The planar 3D image generating unit 840 outputs a planar 3D image including the left-eye planar 3D image and the right-eye planar 3D image to the display unit 850.

The display unit 850 displays the planar 3D image including the left-eye planar 3D image and the right-eye planar 3D image. The display unit 850 sequentially displays the left-eye planar 3D image and the right-eye planar 3D image corresponding to each other, thereby allowing the planar 3D image to be displayed.

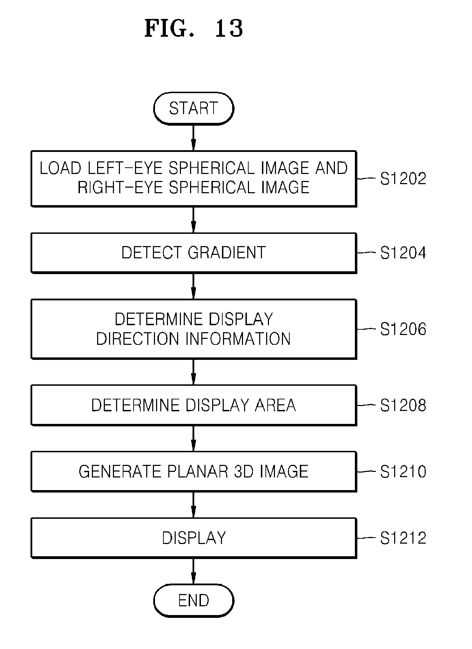

FIG. 13 is a flowchart illustrating a 3D image displaying method according to another embodiment.

The 3D image displaying method according to the current embodiment loads the left-eye spherical image and the right-eye spherical image which correspond to each other (operation S1202). Next, a gradient of the 3D image display apparatus 800a or the control device 1000 is detected (operation S1204), and display direction information is determined from the detected gradient (operation S1206). The display direction information is expressed by coordinate information of a first coordinate system and coordinate information of a second coordinate system.

When the display direction information is determined, a display area corresponding to the display direction information is determined (operation S1208). The display area may be determined on the left-eye spherical image and the right-eye spherical image. The display area may be determined so as to include pixels within a predetermined area based on pixels corresponding to the display direction information.

Next, pixel values of the pixels corresponding to the display area are extracted from the left-eye spherical image and the right-eye spherical image, and a planar 3D image is generated using the extracted pixel values (operation S1210). The pixel values extracted from the left-eye spherical image and the right-eye spherical image may be converted into a left-eye planar 3D image and a right-eye planar 3D image, respectively, by disposing the left-eye spherical image and the right-eye spherical image on a plane, by correcting distortion of the left-eye planar 3D image and the right-eye planar 3D image which may occur during the planarization process, and by making edges of the left-eye planar 3D image and the right-eye planar 3D image linear (operation S1210).

Next, the planar 3D image is displayed by sequentially displaying the left-eye planar 3D image and the right-eye planar 3D image (operation S1212).

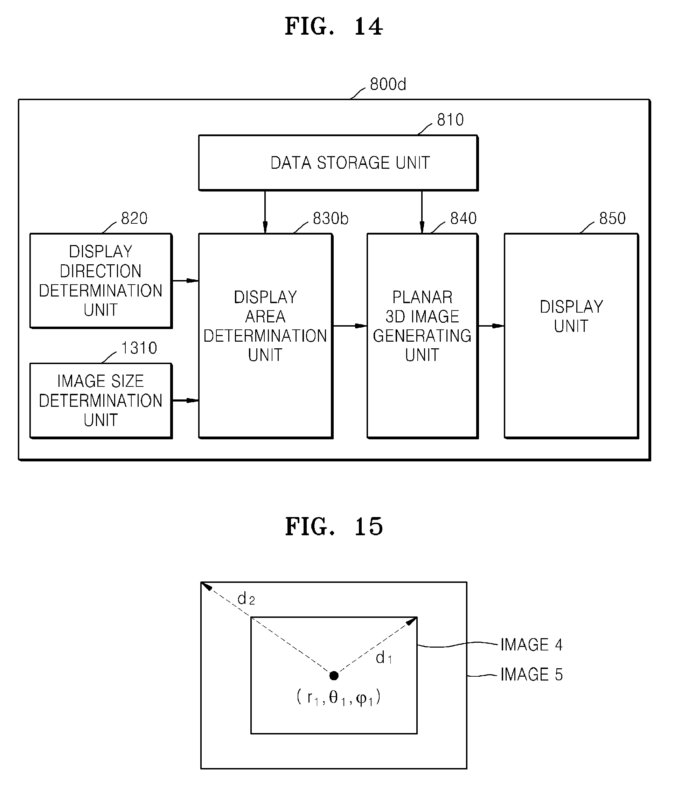

FIG. 14 is a block diagram illustrating a structure of a 3D image display apparatus 800d according to another embodiment. The 3D image display apparatus 800d includes a data storage unit 810, a display direction determination unit 820, an image size determination unit 1310, a display area determination unit 830b, a planar 3D image generating unit 840, and a display unit 850.

The data storage unit 810 stores a 3D image including a left-eye spherical image and a right-eye spherical image.

The display direction determination unit 820 determines display direction information according to a gradient that is detected by the 3D image display apparatus 800d.

The image size determination unit 1310 determines a size of the planar 3D image in accordance with the movement of the 3D image display apparatus 800d or the control device 1000.

According to an embodiment, as illustrated in FIG. 10, when a gradient is determined by the 3D image display apparatus 800d, the image size determination unit 1310 may enlarge or reduce the size of the planar 3D image when the movement of the 3D image display apparatus 800d is detected. According to another embodiment, as illustrated in FIG. 11, when a gradient is detected by the control device 1000, the image size determination unit 1310 may enlarge or reduce the size of the planar 3D image when the movement of the control device 1000 is detected. For example, a user may enlarge the size of the planar 3D image by moving the 3D image display apparatus 800d or the control device 1000 in a direction in which a rear surface of the apparatus 800d or the device 1000 face, and may reduce the size of the planar 3D image by moving the 3D image display apparatus 800d or the control device 1000 in a direction in which a front surface of the apparatus 800d or the device 1000 face, in a state where the user views a screen of the 3D image display apparatus 800d or the control device 1000.

The display area determination unit 830b determines display areas in the left-eye spherical image and the right-eye spherical image, respectively, according to the display direction information determined by the display direction determination unit 820 and size information of the planar 3D image. The size information is determined by the image size determination unit 1310. As described above, the display area determination unit 830b detects pixels of the left-eye spherical image which correspond to display direction information r₁, θ₁, and ρ₁ and determines pixels within a predetermined area based on the pixels to be the display areas. The predetermined area is determined according to the size information of the planar 3D image which is determined by the image size determination unit 1310.

FIG. 15 is a diagram illustrating a process of determining a display area according to another embodiment.

As illustrated in FIG. 15, a central point of the display area is determined according to display direction information r₁, θ₁, and ρ₁. Next, a size of a left-eye planar 3D image or a right-eye planar 3D image is determined according to size information of a planar 3D image. For example, size information of the planar 3D image may be determined according to a distance d₁ or d₂ between the central point and a vertex. When the size information of the planar 3D image is d₁, the display area is determined to be an IMAGE 4. When the size information of the planar 3D image is d₂, the display area is determined to be an IMAGE 5.

The planar 3D image generating unit 840 generates the planar 3D image corresponding to the display area from a left-eye spherical image and a right-eye spherical image.

The display unit 850 displays the left-eye planar 3D image and the right-eye planar 3D image. The display unit 850 may display the planar 3D image by sequentially displaying the left-eye planar 3D image and the right-eye planar 3D image which correspond to each other.

According to the embodiments, an apparatus and method for generating and displaying a 3D image allow a user to view a 3D image from a 360-degree field of view.

Meanwhile, various embodiments can also be embodied as computer readable codes on a computer readable recording medium. The computer readable recording medium is any data storage device that can store data which can be thereafter read by a computer system. Examples of the computer readable codes are configured so as to perform operations for providing a 3D image generating method and a 3D image displaying method according to the present when the codes are read out from the computer readable recording medium by a processor and are executed. The computer readable codes may be embodied with various programming languages. Also, functional programs, codes, and code segments for accomplishing the invention can be easily construed by programmers skilled in the art to which the invention pertains.

All references, including publications, patent applications, and patents, cited herein are hereby incorporated by reference to the same extent as if each reference were individually and specifically indicated to be incorporated by reference and were set forth in its entirety herein.

For the purposes of promoting an understanding of the principles of the invention, reference has been made to the embodiments illustrated in the drawings, and specific language has been used to describe these embodiments. However, no limitation of the scope of the invention is intended by this specific language, and the invention should be construed to encompass all embodiments that would normally occur to one of ordinary skill in the art. The terminology used herein is for the purpose of describing the particular embodiments and is not intended to be limiting of exemplary embodiments of the invention. In the description of the embodiments, certain detailed explanations of related art are omitted when it is deemed that they may unnecessarily obscure the essence of the invention.

The apparatus described herein may comprise a processor, a memory for storing program data to be executed by the processor, a permanent storage such as a disk drive, a communications port for handling communications with external devices, and user interface devices, including a display, touch panel, keys, buttons, etc. When software modules are involved, these software modules may be stored as program instructions or computer readable code executable by the processor on a non-transitory computer-readable media such as magnetic storage media (e.g., magnetic tapes, hard disks, floppy disks), optical recording media (e.g., CD-ROMs, Digital Versatile Discs (DVDs), etc.), and solid state memory (e.g., random-access memory (RAM), read-only memory (ROM), static random-access memory (SRAM), electrically erasable programmable read-only memory (EEPROM), flash memory, thumb drives, etc.). The computer readable recording media may also be distributed over network coupled computer systems so that the computer readable code is stored and executed in a distributed fashion. This computer readable recording media may be read by the computer, stored in the memory, and executed by the processor.

Also, using the disclosure herein, programmers of ordinary skill in the art to which the invention pertains may easily implement functional programs, codes, and code segments for making and using the invention.

The invention may be described in terms of functional block components and various processing steps. Such functional blocks may be realized by any number of hardware and/or software components configured to perform the specified functions. For example, the invention may employ various integrated circuit components, e.g., memory elements, processing elements, logic elements, look-up tables, and the like, which may carry out a variety of functions under the control of one or more microprocessors or other control devices. Similarly, where the elements of the invention are implemented using software programming or software elements, the invention may be implemented with any programming or scripting language such as C, C++, JAVA®, assembler, or the like, with the various algorithms being implemented with any combination of data structures, objects, processes, routines or other programming elements. Functional aspects may be implemented in algorithms that execute on one or more processors. Furthermore, the invention may employ any number of conventional techniques for electronics configuration, signal processing and/or control, data processing and the like. Finally, the steps of all methods described herein may be performed in any suitable order unless otherwise indicated herein or otherwise clearly contradicted by context.

For the sake of brevity, conventional electronics, control systems, software development and other functional aspects of the systems (and components of the individual operating components of the systems) may not be described in detail. Furthermore, the connecting lines, or connectors shown in the various figures presented are intended to represent exemplary functional relationships and/or physical or logical couplings between the various elements. It should be noted that many alternative or additional functional relationships, physical connections or logical connections may be present in a practical device. The words "mechanism", "element", "unit", "structure", "means", and "construction" are used broadly and are not limited to mechanical or physical embodiments, but may include software routines in conjunction with processors, etc.

The use of any and all examples, or exemplary language (e.g., "such as") provided herein, is intended merely to better illuminate the invention and does not pose a limitation on the scope of the invention unless otherwise claimed. Numerous modifications and adaptations will be readily apparent to those of ordinary skill in this art without departing from the spirit and scope of the invention as defined by the following claims. Therefore, the scope of the invention is defined not by the detailed description of the invention but by the following claims, and all differences within the scope will be construed as being included in the invention.

No item or component is essential to the practice of the invention unless the element is specifically described as "essential" or "critical". It will also be recognized that the terms "comprises," "comprising," "includes," "including," "has," and "having," as used herein, are specifically intended to be read as open-ended terms of art. The use of the terms "a" and "an" and "the" and similar referents in the context of describing the invention (especially in the context of the following claims) are to be construed to cover both the singular and the plural, unless the context clearly indicates otherwise. In addition, it should be understood that although the terms "first," "second," etc. may be used herein to describe various elements, these elements should not be limited by these terms, which are only used to distinguish one element from another. Furthermore, recitation of ranges of values herein are merely intended to serve as a shorthand method of referring individually to each separate value falling within the range, unless otherwise indicated herein, and each separate value is incorporated into the specification as if it were individually recited herein.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A three-dimensional (3D) image generating method comprising:
acquiring a plurality of captured-images, the plurality of captured-images comprising left-eye images and right-eye images, and direction information when capturing each of the plurality of captured-images;
generating a left-eye spherical image by disposing the left-eye images of the plurality of captured-images in a first spherical coordinate system, and generating a right-eye spherical image by disposing the right-eye images of the plurality of captured-images in a second spherical coordinate system by using the direction information of the plurality of captured-images; and
storing the left-eye spherical image and the right-eye spherical image.

2. The 3D image generating method of claim 1, wherein:
generating the left-eye spherical image comprises stitching the left-eye images of the plurality of captured-images disposed in the first spherical coordinate system; and
generating the right-eye spherical image comprises stitching the right-eye images of the plurality of captured-images disposed in the second spherical coordinate system.

3. The 3D image generating method of claim 2,
wherein generating the left-eye spherical image comprises determining the left-eye images to be stitched based on a result of matching the left-eye images and the right-eye images of the plurality of captured-images, and
wherein generating the right-eye spherical image comprises determining the right-eye images to be stitched based on the result of matching the left-eye images and the right-eye images of the plurality of captured-images.

4. The 3D image generating method of claim 1, wherein the storing of the left-eye spherical image and the right-eye spherical image comprises:
storing the left-eye spherical image together with a coordinate value of each pixel of the left-eye spherical image in the first spherical coordinate system; and
storing the right-eye spherical image together with a coordinate value of each pixel of the right-eye spherical image in the second spherical coordinate system.

5. A three-dimensional (3D) image displaying method comprising:
loading a left-eye spherical image in which pixels thereof are disposed in a first spherical coordinate system and a right-eye spherical image in which pixels thereof are disposed in a second spherical coordinate system;
detecting a gradient of a control device;
determining display direction information based on the detected gradient;
determining a display area corresponding to the display direction information;
generating a planar 3D image corresponding to the display area from the left-eye spherical image and the right-eye spherical image; and
displaying the planar 3D image.

6. The 3D image displaying method of claim 5, further comprising determining a size of the planar 3D image based on movement of the control device.

7. The 3D image displaying method of claim 5,
wherein the generating of the planar 3D image comprises generating a left-eye planar image and a right-eye planar image by disposing pixel values of the display area of the left-eye spherical image and the right-eye spherical image on a plane, and
wherein the displaying of the planar 3D image comprises alternately displaying the left-eye planar image and the right-eye planar image.

8. A three-dimensional (3D) image generating apparatus comprising:
a first optical system and a second optical system that collect incident light;
at least one imaging element that photoelectrically converts the incident light passing through the first optical system and the second optical system;
an image acquiring unit that generates a plurality of captured-images, the plurality of captured-images comprising left-eye images and right-eye images, by using the first optical system, the second optical system, and the imaging element;
a direction information acquiring unit that acquires direction information for each of the plurality of captured-images;
a spherical image generating unit that generates a left-eye spherical image by disposing the left-eye images of the plurality of captured-images in a first spherical coordinate system, and generates a right-eye spherical image by disposing the right-eye images of the plurality of captured-images in a second spherical coordinate system by using the direction information of the plurality of captured-images; and
a data storage unit that stores the left-eye spherical image and the right-eye spherical image.

9. The 3D image generating apparatus of claim 8, wherein the spherical image generating unit comprises
a left-eye spherical image generating unit that generates the left-eye spherical image by stitching the left-eye images of the plurality of captured-images disposed in the first spherical coordinate system; and
a right-eye spherical image generating unit that generates the right-eye spherical image by stitching the right-eye images of the plurality of captured-images disposed in the second spherical coordinate system.

10. The 3D image generating apparatus of claim 9,
wherein the left-eye spherical image generating unit determines the left-eye images to be stitched based on a result of matching the left-eye images and the right-eye images of the plurality of captured-images, and
wherein the right-eye spherical image generating unit determines the right-eye images to be stitched based on a result of matching the left-eye images and the right-eye images of the plurality of captured-images.

11. The 3D image generating apparatus of claim 8, wherein the data storage unit stores the left-eye spherical image together with a coordinate value of each pixel of the left-eye spherical image in the first spherical coordinate system, and stores the right-eye spherical image together with a coordinate value of each pixel of the right-eye spherical image in the second spherical coordinate system.

12. A three-dimensional (3D) image display apparatus comprising:
a data storage unit that stores a left-eye spherical image in which pixels thereof are disposed in a first spherical coordinate system and a right-eye spherical image in which pixels thereof are disposed in a second spherical coordinate system;
a display direction determination unit that detects a gradient of a control device and determines display direction information based on the detected gradient;
a display area determination unit that determines a display area corresponding to the display direction information;
a planar 3D image generating unit that generates a planar 3D image corresponding to the display area from the left-eye spherical image and the right-eye spherical image; and
a display unit that displays the planar 3D image.

13. The 3D image display apparatus of claim 12, further comprising an image size determination unit that determines a size of the planar 3D image based on a movement of the control device.

14. The 3D image display apparatus of claim 12,
wherein the planar 3D image generating unit generates a left-eye planar image and a right-eye planar image by disposing pixel values of the display area of the left-eye spherical image and the right-eye spherical image on a plane, and
wherein the display unit alternately displays the left-eye planar image and the right-eye planar image.

15. A non-transitory computer-readable recording medium that stores computer program codes for executing a three-dimensional (3D) image generating method when read out and executed by a processor, the 3D image generating method comprising:
acquiring a plurality of captured-images, the plurality of captured-images comprising left-eye images and right-eye images, and direction information when capturing each of the plurality of captured-images;
generating a left-eye spherical image by disposing the left-eye images of the plurality of captured-images in a first spherical coordinate system, and generating a right-eye spherical image by disposing the right-eye images of the plurality of captured-images in a second spherical coordinate system, by using the direction information of the plurality of captured-images; and
storing the left-eye spherical image and the right-eye spherical image.
